# EUROPEAN PATENT SPECIFICATION

(11) **EP 2 461 126 B1**
(45) Date of publication and mention of the grant of the patent: **10.01.2018**
(21) Application number: 10804472.8
(22) Date of filing: 22.07.2010
(51) Int. Cl.: F27B 3/18, C21C 5/52, F27B 3/08, F27D 3/04, F27D 13/00

(54) **ARC MELTING EQUIPMENT AND MOLTEN METAL MANUFACTURING METHOD USING ARC MELTING EQUIPMENT**
LICHTBOGENSCHMELZANLAGE UND VERFAHREN ZU HERSTELLUNG VON METALLSCHMELZE MIT EINER LICHTBOGENSCHMELZANLAGE
EQUIPEMENT DE FUSION À ARC ET PROCÉDÉ DE FABRICATION DE MÉTAL FONDU UTILISANT L'ÉQUIPEMENT DE FUSION À ARC

(30) Priority: 30.07.2009 JP 2009177225
(43) Date of publication of application: 06.06.2012
(73) Proprietor: JP Steel Plantech Co., Kouhoku-ku Yokohama-shi Kanagawa 222-0033 (JP)
(72) Inventor: SATO, Yasuhiro, Yokohama-shi Kanagawa 221-0056 (JP)
(74) Representative: Hoffmann Eitle
(86) International application number: PCT/JP2010/062738
(87) International publication number: WO 2011/013726

(56) References cited:
- WO-A1-2005/052481
- JP-A- 9 273 736
- JP-A- 2001 074 377
- JP-U- 52 063 106
- JP-U- 52 063 106

## Description

The present invention relates to an electric arc melting facility for melting pieces of source iron having various lengths, for example iron scraps or direct-reduced iron, and also to a method for producing molten metal by using the electric arc melting facility.

A batch type electric arc melting furnace is an example of electric arc melting furnaces for melting a source iron, such as scraps. In general, the batch type electric arc melting furnace is structured to charge scraps to be processed into the main body of the melting furnace by means of a bucket, in two or three divided parts. After the scraps are charged, an electric arc is generated by a graphite electrode to melt the scraps by the heat of the arc. In order to accelerate the melting process, chemical reaction heat is additionally applied by blowing oxygen, carbon, etc., into the furnace so that the melting time is shortened and the productivity is improved. In this process, high-temperature exhaust gas including unburned components is exhausted from the melting furnace. Since the electric arc melting furnace greatly consumes electric power, there has been a demand for the development of a melting facility capable of reducing the electric power consumption by utilizing the high-temperature exhaust gas including the unburned components to preheat the scraps to be charged, so as to achieve heat recovery. However, in the batch type melting furnace, it is difficult to increase the preheating efficiency. In addition, when a large amount of scraps are supplied to the furnace in a single batch, power efficiency is reduced because the arc discharge is applied to the scraps.

Unlike the batch type electric arc melting furnace, there is known an electric arc melting facility structured to continuously supply the source iron, such as scraps, and to preheat the source iron to be charged by the exhaust gas. For example, Patent Document 1 (Japanese patent application KOKAI publication No. 11-257859) discloses a melting facility (electric arc melting facility) for a cold source iron (source iron according to the present invention). This melting facility includes a melting chamber for melting the cold source iron, a preheating chamber that is directly connected to an upper side of the melting chamber and configured to preheat the cold source iron by the exhaust gas generated in the melting chamber, an arc-generating electrode for melting the cold source iron in the
melting chamber, cold-source-iron supplying means for supplying the cold source iron to the preheating chamber, a pusher disposed at a lower side of the preheating chamber and configured to be inserted into and extracted from the preheating chamber, and a tap hole formed in the melting chamber. In the melting facility described in Patent Document 1, while the cold source iron is continuously or intermittently supplied to the preheating chamber so as to maintain the state in which the cold source iron exists continuously between the preheating chamber and the melting chamber, the pusher is inserted into and extracted from the preheating chamber filled with the cold source iron to supply the cold source iron from the preheating chamber to the melting chamber. The cold source iron in the melting chamber is melted by the electric arc, and the melting chamber is thereby filled with molten steel, at which time the pusher is stopped. Then, the molten steel is heated by the arc to increase the temperature thereof, and is tapped while the cold source iron exists continuously between the preheating chamber and the melting chamber.

In the above-described continuous-supply melting furnace, the process of melting the source iron, such as scraps, needs to include a period of changing the state of the source iron from solid to liquid (molten metal) (which will be referred to as a "melting period", hereinafter) and a period of increasing the temperature of the molten metal to a temperature required in the subsequent process (which will be referred to as a "temperature-increasing period", hereinafter). If the temperature of the tapped molten metal is low, the tapped molten metal may solidify and adhere to the tap hole, thereby causing an obstruction to the tapping process. Therefore, in the temperature-increasing period, the temperature is increased to a temperature sufficiently higher than the melting point of the source iron. The melting furnace that continuously supplies the source iron as described in Patent Document 1 (which will be referred to as "electric arc melting facility including a shaft-type preheating device", hereinafter) entails such a difficulty that the supply of the source iron to the furnace needs to be smoothly and continuously performed in the melting period, whereas the supply of the source iron to the furnace needs to be inhibited in the temperature-increasing period.

Specifically, in the electric arc melting facility including a shaft-type preheating device, the source iron in the melting chamber is melted by the arc while the source iron is continuously or intermittently supplied to the preheating chamber so as to maintain the state in which the source iron exists continuously between the melting chamber and the preheating chamber (preheating shaft). Therefore, even in the temperature-increasing process and the tapping process, the source iron exists in the preheating chamber and the melting chamber, and the source iron to be charged next can be preheated. Thus, the source iron can be melted with very high thermal efficiency. However, the temperature of the molten metal cannot be efficiently increased if the source iron is continuously supplied to the melting chamber in the temperature-increasing period. Therefore, it is necessary to increase the temperature of the molten metal in the melting chamber while temporarily inhibiting the supply of the source iron to the melting chamber. In the melting facility described in Patent Document 1, the amount of the source iron that is supplied to the melting chamber can be reduced by halting the operation of the pusher, which is a device that pushes the source iron from a lower position in the preheating chamber toward a central position in the melting chamber. However, as the shape of the furnace becomes closer to the shape that allows smooth supply of the source iron, the source iron more easily flows or falls into the molten metal even when the operation of the pusher is halted, thereby making it difficult to increase the temperature. This is so because even though the source iron is preheated, the thermal efficiency in increasing the temperature of the molten metal (temperature-increasing efficiency) is lowered when the solid source iron is supplied into the molten metal.

Here, the molten metal means metal in the molten state, and includes, for example, molten steel and molten iron.

In the melting facility described in Patent Document 1, the melting chamber is tilted, such that the side opposite to the preheating chamber is lowered in the process of increasing the temperature of the molten steel, to reduce the contact area between the molten steel and the cold source iron and thereby to quickly increase the molten steel temperature. If the melting chamber is simply tilted, a large amount of cold source iron falls into the molten steel and it becomes more difficult to increase the temperature. Accordingly, cold-source-iron retaining means (baffle plate) for retaining the cold source iron is provided for the melting chamber, so that the cold source iron is prevented from moving toward the molten steel when the melting chamber is tilted.

The cold-source-iron retaining means described in Patent Document 1, which is arranged for the high-temperature melting chamber and used when the melting chamber is tilted, may become thermally deformed or melted unless it is, for example, water-cooled. On the other hand, the thermal efficiency in the preheating process decreases when water-cooling or the like is performed. Therefore, a mechanism like the cold-source-iron retaining means is preferably not provided. However, as described above, if the melting chamber is tilted without using the cold-source-iron retaining means, the cold source iron flows or falls into the molten steel and it becomes very difficult to increase the temperature.

As described above, in order to make the electric power required to melt the source iron as low as possible, the electric arc melting facility including the shaft-type preheating device is designed such that the source iron is supplied so as to maintain the state in which the source iron exists continuously between the melting chamber and the preheating chamber. In such a facility, the requirement to smoothly supply the source iron into the melting chamber in the melting period and the requirement to stop supplying the source iron into the melting chamber in the temperature-increasing period conflict each other. According to the prior art, it is difficult to increase the temperature of the molten metal with high thermal efficiency by stopping the supply of the source iron to the melting chamber in the temperature-increasing period.

It is desirable to alleviate the above-described problem of the conventional electric arc melting facility. It is desirable to provide a new and improved electric arc melting facility in which the source iron can be melted with high thermal efficiency and supply of the source iron from the preheating chamber to the melting chamber can be controlled, and to provide an operation method for the molten metal by using the electric arc melting facility.

Japanese patent application publication no.

JP 52 063106 U describes an electric arc furnace in which a charge tower is equipped with a pushing device including pusher bodies and is connected to a melting chamber. International patent application publication no.

WO 2005/052481 A1 describes a charging stock preheater having a melting vessel and a pusher. However, neither of these publications discloses the setting of a shaft opening dimension to an optimum value for controlling supply of pieces of source iron, as required by Claim 1 below.

According to an aspect of the present invention, there is provided an electric arc melting facility for melting pieces of source iron having various lengths, comprising a melting chamber configured to melt the pieces of the source iron therein, a shaft-shaped preheating chamber directly connected to the melting chamber to allow the pieces of the source iron to exist continuously between the preheating chamber and the melting chamber and configured to preheat the pieces of the source iron before the pieces of the source iron is supplied to the melting chamber, and an electrode disposed in the melting chamber to melt the pieces of the source iron supplied from the preheating chamber, wherein at least a part of a bottom surface of the preheating chamber is formed as an inclined bottom surface that is inclined downward toward the melting chamber, the bottom surface of the preheating chamber being continuous to a bottom surface of the melting chamber, wherein a shaft opening dimension H is set to an optimum value for controlling supply of the pieces of the source iron such that the supply of the pieces of the source iron from the preheating chamber to the melting chamber is stopped by halting operation of a pushing device, the shaft opening dimension H being a minimum distance from a highest position in a connecting section between the preheating chamber and the melting chamber to the continuous bottom surfaces of the preheating chamber and the melting chamber in the electric arc melting facility, and wherein the pushing device is disposed at a lower side of the preheating chamber and configured to move the pieces of the source iron, supplied from the preheating chamber, toward the melting chamber, such that supply of the pieces of the source iron from the preheating chamber to the melting chamber is performed by operating the pushing device.

Accordingly, the supply of the source iron to the melting chamber can be turned on or off by controlling the operation of the pushing device to stop the supply of the source iron into the melting chamber at a desired timing, such as the temperature-increasing period. As a result, melting of the source iron can be performed with high thermal efficiency.

In an embodiment of the present invention, the optimum value of the shaft opening dimension H may be set to satisfy a relationship of "A ≤ H ≤ 4A", where A is a maximum length of the source iron.

In this case, when the operation of the pushing device is halted to stop the supply of the source iron from the preheating chamber to the melting chamber, the source iron is prevented from flowing or falling into the molten metal in stopping the supply of the source iron to the melting chamber in the temperature-increasing period.

In an embodiment of the present invention, the inclined bottom surface may have an inclination angle of 15 to 45 degrees with respect to a horizontal direction.

In this case, when, for example, the operation of the pushing device is halted in the temperature-increasing period to stop the supply of the source iron, the supply of the source iron to the melting chamber can be reliably stopped because the source iron is prevented from flowing or falling into the molten metal. As a result, melting of the source iron can be performed with high thermal efficiency.

Therefore, according to an embodiment of the present invention, there is provided an electric arc melting facility comprising a melting chamber configured to melt a source iron therein, a shaft-shaped preheating chamber directly connected to the melting chamber and configured to preheat the source iron before the source iron is supplied to the melting chamber, and an electrode disposed in the melting chamber to melt the source iron supplied from the preheating chamber. At least a part of a bottom surface of the preheating chamber is formed as an inclined bottom surface that is inclined downward toward the melting chamber at an angle of 15 to 45 degrees with respect to a horizontal direction, the bottom surface of the preheating chamber being continuous to a bottom surface of the melting chamber. A shaft opening dimension H is set to satisfy a relationship of "A ≤ H ≤ 4A", where A is a maximum length of the source iron, the shaft opening dimension H being a minimum distance from a highest position in a connecting between the preheating chamber and the melting chamber to the continuous bottom surfaces of the preheating chamber and the melting chamber in the electric arc melting facility. A pushing device is disposed at a lower side of the preheating chamber and configured to move the source iron, supplied from the preheating chamber, toward the melting chamber.

In an embodiment of the present invention, an upper portion of the connecting section between the melting chamber and the preheating chamber may include a replaceable component configured to alter the shaft opening dimension.

In this case, the shaft opening dimension H in the electric arc melting facility can be set to an optimum value even when the maximum length A of the source iron is changed.

In an embodiment of the present invention, a minimum distance L from the electrode to the highest position in the connecting section between the preheating chamber and the melting chamber may satisfy a relationship of "0.2A ≤ L ≤ 5A", where A is the maximum length of the source iron.

In this case, electrode breakage can be prevented when the source iron is supplied to the melting chamber.

According to another aspect of the present invention, there is provided a method for producing molten metal by using an electric arc melting facility according to the first-mentioned aspect of the invention; the method comprising: preheating the pieces of the source iron in the preheating chamber by introducing exhaust gas generated in the melting chamber into the preheating chamber; supplying the pieces of the source iron from the preheating chamber for preheating the pieces of the source iron to the melting chamber by operating the pushing device disposed at the lower side of the preheating chamber; producing molten metal by melting the pieces of the source iron by arc-heating in the melting chamber while supplying the pieces of the source iron to the melting chamber so as to maintain a state in which the pieces of the source iron exists in the preheating chamber and the melting chamber; and halting operation of the pushing device and increasing temperature of the molten metal.

Accordingly, the source iron can be supplied to the melting chamber at a desired timing. Therefore, for example, the source iron can be smoothly supplied to the melting chamber in the melting period, and the supply of the source iron can be stopped in the temperature-increasing period. Accordingly, the temperature of the molten metal in the melting chamber can be increased with high thermal efficiency.

When the molten metal is produced from the source iron, such as iron scraps, the supply of the source iron from the preheating chamber to the melting chamber can be arbitrarily stopped (turned on or off). Therefore, the temperature of the molten metal can be efficiently increased in the temperature-increasing period. Accordingly, the operation time and the power consumption can be reduced without reducing the efficiency in preheating the source iron in the melting period.

In order that the invention will be more readily understood, embodiments thereof will now be described, by way of example only, in relation to the drawings, and in which:-
FIG. 1 is a schematic sectional side view of an electric arc melting facility according to an embodiment of the present invention;
FIG. 2 is a schematic sectional plan view of the electric arc melting facility according to the embodiment of the present invention;
FIG. 3 is a schematic sectional side view of the electric arc melting facility according to the embodiment of the present invention in the state in which an opening-adjusting component is replaced;
FIG. 4 is a graph showing the relationship between the operation time (1/productivity) and a shaft opening dimension H;
FIG. 5 is a graph showing the relationship between the operation time and the angle of an inclined bottom surface of a preheating chamber; and
FIG. 6 is a graph showing the relationship between the occurrence frequency of electrode breakage and the minimum distance L between a highest point and the electrode.

A preferred embodiment of the present invention will now be described in detail. The embodiment described below is not intended to limit the scope of the present invention described in the claims. It is not always necessary to include all of the features described in the embodiment to provide the solution according to the present invention.

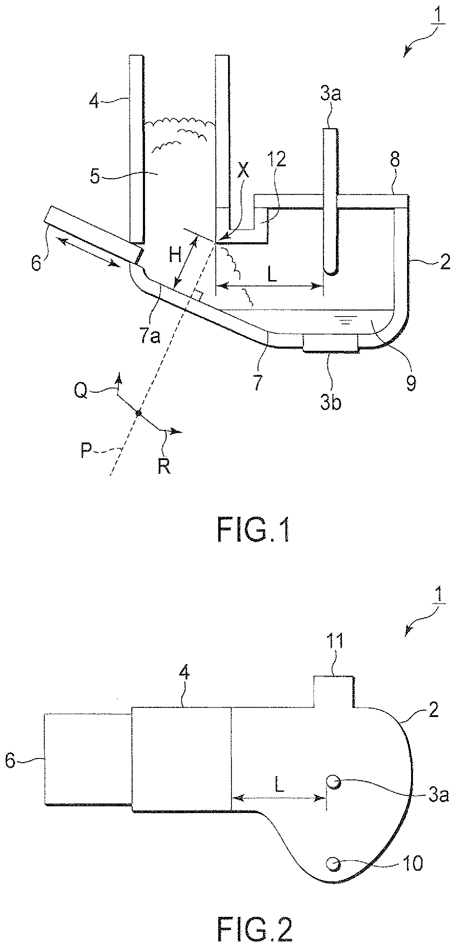

The inventor of the present invention has arrived at the following findings in relation to an electric arc melting facility structured to supply a source iron to maintain the state in which the source iron exists continuously between a melting chamber and a preheating chamber as described above, so that molten metal can be produced by melting the source iron with high energy efficiency, wherein the facility includes a pushing device disposed at a lower side of the preheating chamber and configured to move the source iron from the preheating chamber into the melting chamber toward an arc electrode. In order to supply the source iron to the melting chamber at an arbitrary timing such that the supply of the source iron from the preheating chamber to the melting chamber is performed by operating the pushing device and the supply of the source iron from the preheating chamber to the melting chamber is stopped by halting the operation of the pushing device, it is important to set a shaft opening dimension to an optimum value. Here, the shaft opening dimension is a dimension of an opening of the melting chamber through which the source iron that has been preheated in the preheating chamber is supplied into the molten metal. It has also been found that, in the case where the shaft opening dimension is smaller than that in the prior art so that the source iron is not supplied unless the pushing device is operated and the source iron is supplied only when the pushing device is operated, the supply of the source iron can be turned on or off simply by controlling the pushing device. In this case, it is possible to stop the supply of the source iron into the molten metal in the temperature-increasing period to prevent the source iron from flowing or falling into the molten metal and thereby to increase the temperature of the molten metal with high thermal efficiency. As a result, the present invention has been made. In addition to the shaft opening dimension, it has also been found important to appropriately set an inclination angle of an inclined bottom surface, which is at least a part of a bottom surface of the preheating chamber. Further, it has also been found important to set the distance between the opening and the electrode in accordance with the dimension of the source iron. In the above-described prior art (Patent Document 1), the preheating chamber is described as being located at an upper side of the melting chamber. However, in the following description of an embodiment of the present invention, the entire body of a shaft section in which the source iron is preheated without being charged into the molten metal is defined as a preheating chamber, and so the preheating chamber is described as being arranged next to the melting chamber. This simply depends on the position defined as the boundary between the preheating chamber and the melting chamber, because the preheating chamber and the melting chamber are formed continuously with each other. In either case, the outlet of the preheating chamber and the inlet of the melting chamber are integrated with each other. In the following description of an embodiment of the present invention, a section in which the molten metal is mainly present is defined as the melting chamber. In addition, the shaft opening is defined along a plane at the boundary between the preheating chamber and the melting chamber. The shaft opening and the opening dimension will be described below with reference to FIG. 1.

An embodiment of the present invention will now be described with reference to the drawings. In the present specification and drawings, constituent elements having substantially the same functional structures are denoted by the same reference numerals, and redundant explanations thereof are thus omitted.

FIGS. 1 and 2 are a schematic sectional side view and a schematic sectional plan view, respectively, of an electric arc melting facility according to an embodiment of the present invention.

The electric arc melting facility 1 of the present embodiment includes a melting chamber 2 for a source iron, electrodes 3 (3a and 3b) for melting the source iron in the melting chamber, and a shaft-shaped preheating chamber 4 directly connected to the melting chamber 2 and configured to preheat the source iron. A pushing device 6 for moving the source iron 5 toward the melting chamber 2 is provided at a lower side of the preheating chamber 4. Although not illustrated, lances for blowing oxygen gas and a carbonaceous material into the melting chamber 2 are provided so as to extend through a furnace roof 8.

FIGS. 1 and 2 illustrate the electrode arrangement of a direct-current electric arc melting furnace. However, the number and arrangement of the electrodes provided in the melting chamber 2 are not limited to those shown in FIGS. 1 and 2. For example, in an alternating-current electric arc melting furnace, the bottom electrode 3b is omitted and three electrodes 3a are provided at the top of the furnace.

The pushing device 6 includes a driving device (not shown) that moves the source iron 5 in the preheating chamber 4 toward the melting chamber 2. The driving device is controlled by a controller (not shown). The pushing device 6 is located at the lowermost part of the preheating chamber 4 so that the source iron 5 in the preheating chamber 4 can be efficiently supplied to the melting chamber 2. Specifically, as shown in FIG. 1, the pushing device 6 is arranged so as to extend along an inclined bottom surface 7a of the preheating chamber 4 at a position near a shaft opening through which the source iron 5 is supplied from the preheating chamber 4 to the melting chamber 2. The pushing device 6 is moved along the inclined bottom surface 7a of the preheating chamber 4. However, the pushing device 6 may include a pushing-angle adjusting mechanism for changing the moving direction thereof.

The driving device of the pushing device 6 is preferably controlled by the above-described controller such that the pushing device 6 is operated in the melting period for melting the source iron to produce molten metal and the operation of the pushing device is halted in the temperature-increasing period for increasing the temperature of the molten metal to a temperature required in the subsequent process.

With the electric arc melting facility in which the shaft-shaped preheating chamber is directly connected to the main body of the melting furnace, the source iron 5 can be supplied to the melting chamber 2 so as to maintain the state in which the source iron 5 exists continuously between the melting chamber 2 and the preheating chamber 4. Accordingly, the source iron 5 can be melted in the melting chamber 2 with high thermal efficiency while constantly preheating the source iron 5 by the exhaust gas generated in the melting chamber 2. In addition, since the source iron to be charged next is retained in the preheating chamber (shaft) in the temperature-increasing period, the source iron can be supplied continuously, so that the productivity is increased. In addition, the
efficiency of heat recovery from the exhaust gas can be increased, and the energy efficiency can be increased accordingly.

The source iron is a solid source iron, such as iron scraps, direct-reduced iron, or iron ore, which is to be melted in the electric arc melting facility. The iron scraps include, for example, stainless steel scraps, pig iron, mill scale, or rerollable scrap, and are generated, for example, when steelmaking or other processes are performed by steel manufacturers, when processes using iron products are performed in factories, or when buildings, automobiles, electrical appliances, bridges, etc., are knocked down. In general, the iron scraps are subjected to various processes such as compressing, cutting, and crushing and are formed into predetermined shapes by a scrapper or the like before the iron scraps are traded.

In order to smoothly supply the source iron 5 to the melting chamber in the melting period and quickly increase the temperature of molten metal 9 by stopping the supply of the source iron 5 in the temperature-increasing period, according to the present invention, a shaft opening dimension H is set to an optimum value. The shaft opening dimension H is a dimension of the shaft opening in a height direction, wherein the shaft opening is a connecting section between the preheating chamber 4 and the melting chamber 2.

Referring to FIG. 1, the shaft opening dimension H is equivalent to the length of a perpendicular line P in the electric arc melting facility 1, where the perpendicular line P is defined by a line dropped from a highest point X at the highest position in the connecting section between the preheating chamber 4, which corresponds to a shaft-type preheating device, and the melting chamber 2 to a continuous bottom surface 7 of the preheating chamber 4 and the melting chamber 2. In this case, it is defined that the shaft opening is the cross section of the electric arc melting facility 1 along the perpendicular line P, and the spaces on the Q-side and R-side of the perpendicular line P in the electric arc melting facility 1 are the preheating chamber 4 and the melting chamber 2, respectively. When there are multiple perpendicular lines, the length of the shortest perpendicular line is adopted as the shaft opening dimension H. The shaft opening dimension H is preferably set to an optimum value that satisfies the relationship "A ≤ H ≤ 4A", where A is the maximum length of the source iron 5.

If the shaft opening dimension H is larger, the source iron can be more smoothly supplied to the melting chamber. However, in this case, when the operation of the pushing device is halted in the process of increasing the temperature of the molten metal, the source iron falls into the molten metal. Consequently, the thermal efficiency is reduced in the process of increasing the temperature of the molten metal, and the arc efficiency and the production efficiency are also reduced. In addition, if the shaft opening dimension H is larger, larger pieces of source iron are supplied to the melting chamber, which increases the risk of electrode breakage. When an electrode breakage occurs, the operation must be shut down to replace the electrode, thereby deteriorating the productivity. The production efficiency is reduced because, when the source iron falls into the molten metal in the temperature-increasing period as described above, the amount of molten metal in the melting chamber exceeds a predetermined amount. Consequently, the time required to increase the temperature of the molten metal to the tapping temperature, which is the temperature required in the subsequent process, will be increased. For this reason, H is set to 4A or less (four times the maximum length A of the source iron or less).

On the other hand, if the shaft opening dimension H is too small, it is difficult to supply the source iron to the melting chamber, thereby reducing both the production efficiency and thermal efficiency. For example, when H is smaller than A, the opening may become clogged, which makes it difficult to continue the operation. Therefore, according to an embodiment of the present invention, the pushing device 6 is used to supply the source iron into the molten metal, and the shaft opening dimension H is set within an optimum range ("A ≤ H ≤ 4A"). Consequently, the source iron can be prevented from falling into the molten metal when the operation of the pushing device 6 is halted, and be supplied into the molten metal only when the pushing device 6 is operated. Thus, the supply of the source iron from the preheating chamber to the melting chamber can be arbitrarily stopped (turned on or off).

The maximum length A of the source iron is determined from the maximum length of the source iron to be melted. Here, the maximum length is the maximum dimension of the pieces of source iron when they are measured in all directions. The maximum length is defined as the diameter of the circumscribed sphere of the pieces of source iron, and corresponds to the maximum projection length of the pieces of source iron. As the standards for scraps used as the source iron, JIS G 2401 and the standard according to The Japan Ferrous Raw Materials Association, for example, are known. According to these standards, the source iron is classified in accordance with the type or dimensions into, for example, the categories in which the thickness is 3 to 6 mm, the width is 500 mm or less, and the length is 1,200 mm or less or in which the sum of the thickness, width, and length is 1,800 mm or less. Thus, the size of the scraps is somewhat determined. In the present embodiment, the shaft opening dimension H is determined from the maximum length A of the scraps to be melted in accordance with the above-mentioned standards. However, the maximum length A of the scraps available in the market varies depending on various factors, such as the situation or differences in standards between countries. Therefore, the shaft opening dimension H is appropriately determined in accordance with the maximum length A of the scraps.

In practice, the pieces of source iron that are processed in the electric arc melting facility generally have various lengths. For example, in the case where scraps are used as the source iron, ordinary scraps are a mixture of scraps of various brands. As a typical example of scraps having a maximum length of 1,200 mm, scraps including scraps formed by metal shredders, scraps generated when steel products are cut, wheel scraps, and machining chips will be considered. In this example, the length distribution of the scraps may be such that the amount of scraps having a length less than 25% of the maximum length is 44 mass%, that of scraps having a length of 25% or more and less than 50% is 24 mass%, that of scraps having a length of 50% or more and less than 75% is 18 mass%, and that of scraps having a length of 75% or more and 100% or less is 14 mass%, for example. Thus, the scraps have various lengths. When the length variation of the source iron is as moderate as that in the above-described case, the determination based on the maximum length A according to the embodiment of the present invention can be appropriately applied.

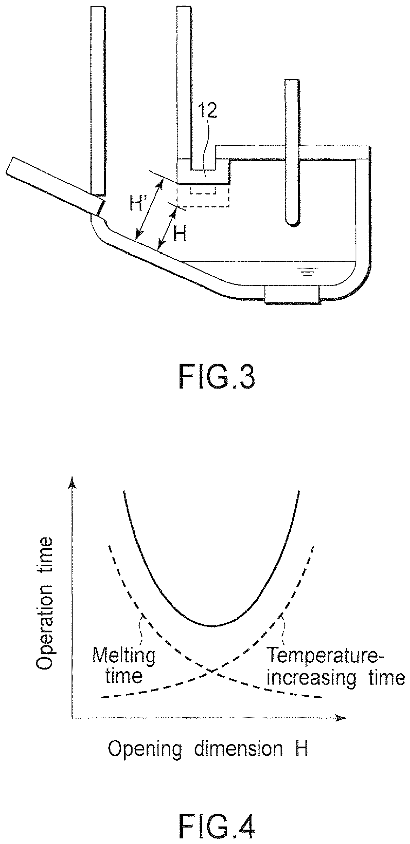

When the maximum length A of the source iron is changed after the electric arc melting furnace is installed, the shaft opening dimension may be altered accordingly. Specifically, as shown in FIG. 3, the shaft opening dimension may be changed from H to H' by replacing a component disposed at an upper side of the opening (indicated by X in FIG. 1) in a boundary section between the preheating chamber and the melting chamber. The electric arc melting facility 1 is typically not manufactured in an integral form but is manufactured by assembling a plurality of components, so that the adjustment using an opening-adjusting component 12 as described above can be performed. Alternatively, when the size of the source iron is changed, the source iron may be processed so as to change the size thereof in accordance with the shaft opening dimension.

The principle of the above discussion will be described with reference to FIG. 4. FIG. 4 is a graph showing the qualitative relationship between the operation time (1/productivity) and the shaft opening
dimension H in the electric arc melting facility of the present embodiment. As shown in FIG. 4, as the shaft opening dimension H is smaller, the melting time in the melting period is longer because the source iron cannot be smoothly supplied to the melting chamber. As the shaft opening dimension H is larger, the melting time is shorter because the source iron can be easily supplied. The temperature-increasing time in the temperature-increasing period is shorter as the shaft opening dimension H is smaller because the source iron does not fall into the molten metal. The temperature-increasing time is longer as the shaft opening dimension H is larger because the source iron flows or falls into the molten metal. Thus, as the shaft opening dimension H is larger, the melting time is shorter and the temperature-increasing time is longer. As a result of the counterbalance between the variations of the melting time and the temperature-increasing time, the shaft opening dimension H has an optimum range in which the operation time can be minimized.

The present inventor conducted various examinations and has found that the optimum range of the shaft opening dimension H is "A ≤ H ≤ 4A", where A is the maximum length of the source iron 5.

In the electric arc melting facility of the present embodiment, at least a part of the continuous bottom surface 7 of the preheating chamber 4 and the melting chamber 2 is formed as the inclined bottom surface 7a at a lower side of the preheating chamber 4. The inclination angle of the inclined bottom surface 7a is preferably 15 to 45 degrees with respect to the horizontal direction. If the inclination of the inclined bottom surface 7a is gentler (if the angle with respect to the horizontal direction is smaller), it is difficult to efficiently supply the source iron toward the melting chamber, thereby increasing the operation time in the melting period. Therefore, the inclination angle of the inclined bottom surface 7a is preferably 15 degrees or more. On the other hand, if the inclination of the inclined bottom surface 7a at the lower side of the preheating chamber 4 is steeper, the source iron is more easily moved toward the melting chamber, so that the source iron can be smoothly supplied toward the electrodes in the melting chamber. However, if the inclination is too steep, there is a risk that the source iron will fall into the molten metal even when the operation of the pushing device is halted. Therefore, the inclination angle of the inclined bottom surface 7a is preferably 45 degrees or less.

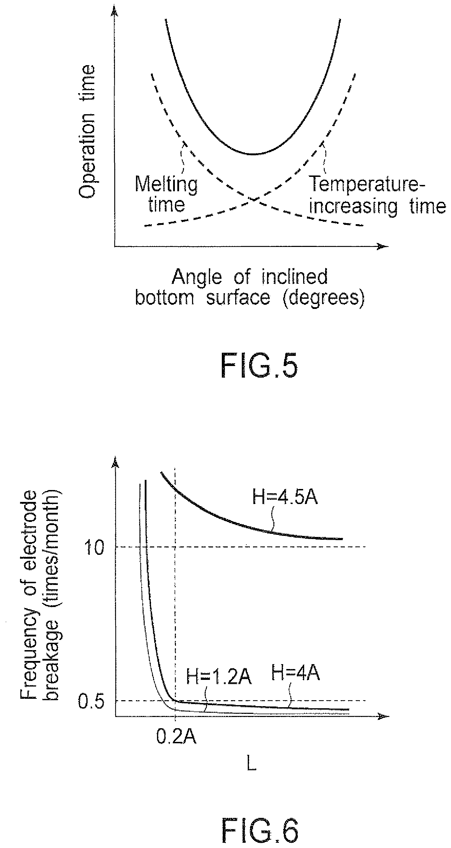

The principle of the above discussion will be described with reference to FIG. 5. FIG. 5 is a graph showing the qualitative relationship between the operation time (1/productivity) and the angle of the inclined bottom surface in the electric arc melting facility of the present embodiment. As shown in FIG. 5, the melting time in the melting period is longer as the angle of the inclined bottom surface is smaller, and is shorter as the angle of the inclined bottom surface is larger because the source iron can be easily supplied. The temperature-increasing time in the temperature-increasing period is shorter as the angle of the inclined bottom surface is smaller, and is longer as the angle of the inclined bottom surface is larger because the source iron flows or falls into the molten metal. Accordingly, in the operation of the electric arc melting facility of the present embodiment, as the angle of the inclined bottom surface is larger, the melting time is shorter and the temperature-increasing time is longer, as shown in FIG. 5. As a result of the counterbalance between the variations of the melting time and the temperature-increasing time, the angle of the inclined bottom surface has an optimum range in which the operation time can be minimized.

The present inventor conducted various examinations and has found that, in the furnace in which the shaft opening dimension H satisfies the relationship "A ≤ H ≤ 4A", where A is the maximum length, the inclination angle of the inclined bottom surface is preferably in the range of 15 to 45 degrees with respect to the horizontal direction to shorten the operation time. In particular, if the inclination angle is 25 to 35 degrees, the source iron can be effectively prevented from falling into the molten steel even when the length variation of the source iron that satisfies "A ≤ H ≤ 4A" is large.

Table 1 shows the result of the above-mentioned examinations.

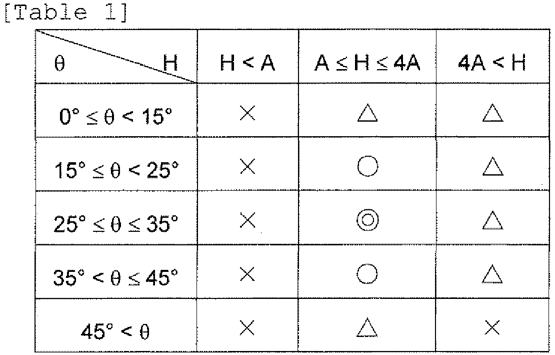

In Table 1, 0 is the inclination angle of the inclined bottom surface. Table 1 shows the control performance of turning on and off the supply of the source iron from the preheating chamber to the melting chamber when the inclination angle θ and the shaft opening dimension H are changed. Specifically, Table 1 shows the smoothness of the supply of the source iron from the preheating chamber to the melting chamber and the occurrence of the situation in which the source iron flows or falls into the molten metal in the melting chamber in the temperature-increasing period. In Table 1, ×, Δ, ○, and ⊚ show the smoothness of the supply of the source iron from the preheating chamber to the melting chamber and the level of performance of preventing the source iron from flowing or falling into the molten metal. Specifically, "×" shows the situation in which the source iron cannot be smoothly supplied from the preheating chamber to the melting chamber or the situation in which the source iron flows or falls into the molten metal. The smoothness of the supply of the source iron and the level of performance of preventing the source iron from flowing or falling into the molten metal are improved in the order of Δ, ○, and ⊚.

As shown in Table 1, the optimum range of the shaft opening dimension H is "A ≤ H ≤ 4A". When the shaft opening dimension H is in this range, the source iron can be smoothly supplied from the preheating chamber to the melting chamber in the melting period, and the supply of the source iron from the preheating chamber to the melting chamber can be stopped in the temperature-increasing period. Even if the shaft opening dimension H is in the range of "A ≤ H ≤ 4A", when the inclination angle (θ) of the inclined bottom surface is larger than 45 degrees with respect to the horizontal direction, the source iron easily falls into the molten metal. On the other hand, when the inclination angle (θ) is less than 15 degrees, the source iron cannot be smoothly supplied to the melting chamber depending on the state of the source iron. Therefore, most preferably, the inclination angle (θ) of the inclined bottom surface is 15 degrees or more and 45 degrees or less. In this case, the source iron can be reliably prevented from flowing or falling into the molten metal and can be smoothly supplied.

In addition, a minimum distance L from the electrode 3 to the highest point (X in FIG. 1) at the highest position in the connecting section between the preheating chamber and the melting chamber (distance between X and the electrode 3a) preferably satisfies the relationship "0.2A ≤ L ≤ 5A", where A is the maximum length of the source iron. If the distance L between the shaft opening and the electrode is too small, electrode breakage easily occurs when the source iron is supplied. As described above, when an electrode breakage occurs, the operation must be shut down to replace the electrode, thereby deteriorating the productivity. In addition, when the source iron is present under the electrode, the arc efficiency is reduced. Therefore, L is preferably 0.2A or more. On the other hand, if the distance L between the opening and the electrode is too large, the electrode and the source iron are too distant from each other, thereby reducing the arc efficiency. Therefore, L is preferably 5A or less.

The principle of the above discussion will be described with reference to FIG. 6. FIG. 6 is a graph showing the relationship between the frequency of electrode breakage and the above-described minimum distance L (distance between X and the electrode 3a) when the electric arc melting facility of the present embodiment is operated. In other words, FIG. 6 shows the variation in the frequency of electrode breakage depending on the distance L between the source-iron charge opening and the electrode. As shown in FIG. 6, the frequency of electrode breakage suddenly increases when L is smaller than 0.2A, and decreases as L is larger with respect to A. Therefore, L is preferably set to 0.2A or more. With regard to the relationship with the shaft opening dimension H, as shown in FIG. 6, when H = 4A, the frequency of electrode breakage can be reduced to 0.5 times/month or less by setting L to 0.2A or more. However, when H = 4.5A, which is an example of the case where H > 4A, the frequency of electrode breakage is 10 times/month or more even when L is set to 0.2A or more. Thus, it has been found that, also from the viewpoint of preventing the electrode breakage, the shaft opening dimension H is preferably set within the range of H ≤ 4A, where A is the maximum length of the source iron 5. As shown in FIG. 6, if H is too large with respect to A, the frequency of electrode breakage cannot be reduced to below 10 times/month even when L is larger, thereby reducing the power efficiency in the process of melting the scraps by means of the arc.

As described above, according to the present embodiment, the minimum distance L from the electrode 3a to the highest point X at the highest position in the connecting section between the preheating chamber and the melting chamber satisfies the relationship "0.2A ≤ L ≤ 5A", where A is the maximum length of the source iron. Consequently, the occurrence of electrode breakage and reduction in the arc efficiency can be prevented in the process of supplying the source iron.

Next, a method for producing molten metal by using the above-described electric arc melting facility will be described with reference to FIG. 1.

The operation method includes a step of preheating the source iron 5 in the preheating chamber 4 by introducing the exhaust gas generated in the melting chamber 2 into the preheating chamber 4; a step of supplying the source iron 5 from the preheating chamber 4 for preheating the source iron 5 to the melting chamber 2 by operating the pushing device 6 arranged at the lower side of the preheating chamber 4; a step of producing molten metal 9 by melting the source iron 5 by arc-heating in the melting chamber 2 while supplying the source iron 5 to the melting chamber 2 so as to maintain the state in which the source iron 5 exists in the preheating chamber 4 and the melting chamber 2; and a step of halting the operation of the pushing device 6 and increasing the temperature of the molten metal 9. In this way, the molten metal, such as molten steel, can be produced from the source iron.

### [Example 1]

Molten steel was produced by melting scraps in a facility structured as in the electric arc melting facility shown in FIGS. 1 and 2 and having a furnace capacity of about 200 tons.

The scraps used here were iron scraps formed such that the maximum length thereof was 1,200 mm or less (maximum length A = 1,200 mm).

(Comparative Example) The shaft opening dimension H of the electric arc melting facility was set to 5,000 mm (4A < H), and the angle of the inclined bottom surface at the bottom of the preheating chamber was set to 30 degrees with respect to the horizontal direction. The minimum distance L between the highest point at the highest position in the connecting section between the preheating chamber and the melting chamber and the electrodes was about 2.5 m.

The scraps were charged into the preheating chamber in several divided parts. In the melting period, the pushing device was operated to continuously supply the scraps to the melting chamber. When a certain amount of scraps were charged into the shaft, the operation of the pushing device was halted. The operation of the pushing device was turned on and off by the controller. At this time, the elapsed time was about 40 minutes, and the accumulated amount of power consumption was about 40 MWh. When the operation of the pushing device was halted, the supply of the scraps into the melting chamber did not stop completely, and a small amount of scraps were continuously supplied to the melting chamber. It took 10 minutes to increase the temperature of the molten steel to about 1,650°C. In this process, the power consumption was 10 MWh.

(Example of Present Invention) Next, the opening-adjusting component (not shown) arranged at the upper side of the opening (indicated by X in FIG. 1) in the electric arc melting facility was replaced so that the shaft opening dimension H was set to 3,000 mm, which is within the shaft opening dimension range of "A ≤ H ≤ 4A".

The scraps were melted in a manner set as in the above-described example. The amount of molten steel in the melting chamber reached a predetermined amount when the power consumption was 40 MWh and the elapsed time was 40 minutes, at which time the operation of the pushing device was halted. As a result, the supply of the scraps to the melting chamber was stopped, and it took 5 minutes to increase the temperature of the molten steel to about 1,650°C. In this process, the amount of power consumed was 5 MWh.

As a result of the above-described examples, when the shaft opening dimension H was set within the range according to an embodiment of the present invention, it was possible to control the supply of the scraps from the preheating chamber to the melting chamber. Consequently, the temperature-increasing efficiency was increased and the productivity was improved by 10%. Specifically, when the shaft opening dimension H was set to H = 5,000 mm, which is outside the optimum range of the shaft opening dimension H according to an embodiment of the present invention, the supply of the scraps to the melting chamber was not completely stopped even when the operation of the pushing device was halted. Therefore, the thermal efficiency in the process of increasing the temperature of the molten steel was not sufficiently high. In contrast, when the shaft opening dimension H was set to H = 3,000 mm, which is within the optimum range for the shaft opening dimension H according to an embodiment of the present invention, the supply of the scraps to the melting chamber was completely stopped when the operation of the pushing device was halted. As a result, the thermal efficiency in the process of increasing the temperature of the molten steel was increased.

### [Example 2]

Molten steel was produced by melting scraps in a facility structured as in the electric arc melting facility shown in FIGS. 1 and 2 and having a furnace capacity of about 200 tons. First, the shaft opening dimension H was set to 700 mm on the assumption that the maximum scrap length was A = 500 mm.

Then, the scraps to be processed were changed to those having a maximum scrap length A of 1,000 mm. In this case, the relationship between the shaft opening dimension H and the maximum scrap length A was H < A. Thus, it was expected that it would be difficult to smoothly charge the scraps into the melting chamber. Therefore, while the operation was stopped, the opening-adjusting component 12 at the upper side of the shaft opening was replaced so that the shaft opening dimension H was altered to 1,500 mm. Then, the operation for processing the scraps with the maximum length A of 1,000 mm was performed. As a result, stable operation was performed.

Although a preferred embodiment of the present invention is described above with reference to the accompanying drawings, the present invention is not limited to the above-described embodiment, as a matter of course. It is apparent to those skilled in the art that various alterations and modifications can be made within the scope described in the claims, and such alterations and modifications are, of course, also included in the technical scope of the present invention.

### [Reference Signs List]

- 1: electric arc melting facility
- 2: melting chamber
- 3: electrode
3a electrode at the top
3b electrode at the bottom
- 4: preheating chamber
- 5: source iron
- 6: pushing device
- 7: bottom surface of melting chamber
- 7a: inclined bottom surface
- 8: furnace roof
- 9: molten metal
- 10: tap hole
- 11: slag discharge port
- 12: opening-adjusting component
- H: shaft opening dimension
- L: minimum distance between X and electrode
- P: perpendicular line
- Q: arrow indicating preheating-chamber side
- R: arrow indicating melting-chamber side
- X: highest point

## Claims

1. An electric arc melting facility (1) for melting pieces of source iron having various lengths, comprising a melting chamber (2) configured to melt the pieces of the source iron (5) therein, a shaft-shaped preheating chamber (4) directly connected to the melting chamber to allow the pieces of the source iron to exist continuously between the preheating chamber and the melting chamber and configured to preheat the pieces of the source iron before the pieces of the source iron is supplied to the melting chamber, and an electrode (3a, 3b) disposed in the melting chamber to melt the pieces of the source iron supplied from the preheating chamber,
wherein at least a part of a bottom surface (7) of the preheating chamber is formed as an inclined bottom surface (7a) that is inclined downward toward the melting chamber, the bottom surface of the preheating chamber being continuous to a bottom surface of the melting chamber, wherein a pushing device is disposed at a lower side of the preheating chamber and configured to move the pieces of the source iron, supplied from the preheating chamber, towards the melting chamber, such that supply of the pieces of the source iron from the preheating chamber to the melting chamber is performed by operating the pushing device, **characterized in that** a shaft opening dimension H is set to an optimum value for controlling supply of the pieces of the source iron such that the supply of the pieces of the source iron from the preheating chamber to the melting chamber is stopped by halting operation of the pushing device (6), the shaft opening dimension H being a minimum distance from a highest position in a connecting section between the preheating chamber and the melting chamber to the continuous bottom surfaces of the preheating chamber and the melting chamber in the electric arc melting facility.

2. The electric arc melting facility according to claim 1, wherein the optimum value of the shaft opening dimension H is set to satisfy a relationship of "A ≤ H ≤ 4A" where A is a maximum length of the pieces of the source iron.

3. The electric arc melting facility according to claim 1 or 2, wherein
the inclined bottom surface has an inclination angle with respect to a horizontal direction, and
the inclination angle is set to an optimum value for controlling supply of the pieces of the source iron such that the supply of the pieces of the source iron from the preheating chamber to the melting chamber is stopped by halting operation of the pushing device.

4. The electric arc melting facility according to claim 3, wherein the inclination angle with respect to the horizontal direction is within a range of 15 to 45 degrees.

5. The electric arc melting facility according to claim 4, wherein the inclination angle with respect to the horizontal direction is within a range of 25 to 35 degrees.

6. The electric arc melting facility according to any one of claims 1 to 5, wherein an upper portion of the connecting section between the melting chamber and the preheating chamber includes a replaceable component (12) configured to alter the shaft opening dimension.

7. The electric arc melting facility according to any one of claims 1 to 6, wherein a minimum distance L from the electrode to the highest position in the connecting section between the preheating chamber and the melting chamber satisfies a relationship of "0.2A ≤ L ≤ 5A", where A is the maximum length of the pieces of the source iron.

8. A method for producing molten metal by using the electric arc melting facility according to any one of claims 1 to 7, the method comprising:
preheating the pieces of the source iron in the preheating chamber by introducing exhaust gas generated in the melting chamber into the preheating chamber;
supplying the pieces of the source iron from the preheating chamber for preheating the pieces of the source iron to the melting chamber by operating the pushing device disposed at the lower side of the preheating chamber;
producing molten metal by melting the pieces of the source iron by arc-heating in the melting chamber while supplying the pieces of the source iron to the melting chamber so as to maintain a state in which the pieces of the source iron exists in the preheating chamber and the melting chamber; and
halting operation of the pushing device and increasing temperature of the molten metal.

9. The method for producing molten metal according to claim 8, wherein a relationship of "A ≤ H ≤ 4A" is satisfied, where A is the maximum length of the pieces of the source iron.

10. The method for producing molten metal according to claim 8 or 9, wherein a minimum distance L from the electrode to the highest position in the connecting section between the preheating chamber and the melting chamber satisfies a relationship of "0.2A ≤ L ≤ 5A", where A is the maximum length of the pieces of the source iron.

## Patentansprüche

1. Lichtbogenschmelzanlage (1) zum Schmelzen von Stücken von Eisen-Chargiergut, das verschiedene Längen besitzt, umfassend eine Schmelzkammer (2), die zum darin Schmelzen der Stücke des Eisen-Chargierguts (5) eingerichtet ist, eine direkt mit der Schmelzkammer verbundene schachtförmige Vorwärmkammer (4), um zu gestatten, dass die Stücke des Eisen-Chargierguts durchlaufend zwischen der Vorwärmkammer und der Schmelzkammer vorhanden sind, und dazu eingerichtet, die Stücke des Eisen-Chargierguts vorzuheizen, bevor die Stücke des Eisen-Chargierguts der Schmelzkammer zugeführt werden, und eine in der Schmelzkammer angeordnete Elektrode (3a, 3b) zum Schmelzen der von der Vorwärmkammer zugeführten Stücke des Eisen-Chargierguts,
wobei mindestens ein Teil einer Bodenfläche (7) der Vorwärmkammer als geneigte Bodenfläche (7a) ausgebildet ist, die zu der Schmelzkammer hin abwärts geneigt ist, wobei die Bodenfläche der Vorwärmkammer durchlaufend mit einer Bodenfläche der Schmelzkammer ist,
wobei eine Schiebevorrichtung an einer unteren Seite der Vorwärmkammer angeordnet ist und dazu eingerichtet ist, die Stücke des Eisen-Chargierguts, die von der Vorwärmkammer zugeführt werden, zu der Schmelzkammer zu bewegen, sodass die Zufuhr der Stücke des Eisen-Chargierguts von der Vorwärmkammer zu der Schmelzkammer durch Betätigen der Schiebevorrichtung durchgeführt wird, **dadurch gekennzeichnet, dass**
eine Schachtöffnungsabmessung H auf einen optimalen Wert zur Steuerung der Zufuhr der Stücke des Eisen-Chargierguts eingestellt ist, sodass die Zufuhr der Stücke des Eisen-Chargierguts von der Vorwärmkammer zu der Schmelzkammer durch eine Haltbetätigung der Schiebevorrichtung (6) gestoppt wird, wobei die Schachtöffnungsabmessung H ein Mindestabstand von einer höchsten Position in einem Verbindungsabschnitt zwischen der Vorwärmkammer und der Schmelzkammer zu den durchlaufenden Bodenflächen der Vorwärmkammer und der Schmelzkammer in der Lichtbogenschmelzanlage ist.

2. Lichtbogenschmelzanlage nach Anspruch 1, wobei der optimale Wert der Schachtöffnungsabmessung H so eingestellt ist, dass er eine Beziehung von "A ≤ H ≤ 4A" erfüllt, wobei A eine maximale Länge der Stücke des Eisen-Chargierguts ist.

3. Lichtbogenschmelzanlage nach Anspruch 1 oder 2, wobei
die geneigte Bodenfläche einen Neigungswinkel bezüglich einer horizontalen Richtung aufweist, und
der Neigungswinkel auf einen optimalen Wert zur Steuerung der Zufuhr der Stücke des Eisen-Chargierguts eingestellt ist, sodass die Zufuhr der Stücke des Eisen-Chargierguts von der Vorwärmkammer zu der Schmelzkammer durch eine Haltbetätigung der Schiebevorrichtung gestoppt wird.

4. Lichtbogenschmelzanlage nach Anspruch 3, wobei der Neigungswinkel bezüglich der horizontalen Richtung innerhalb eines Bereichs von 15 bis 45 Grad liegt.

5. Lichtbogenschmelzanlage nach Anspruch 4, wobei der Neigungswinkel bezüglich der horizontalen Richtung innerhalb eines Bereichs von 25 bis 35 Grad liegt.

6. Lichtbogenschmelzanlage nach einem der Ansprüche 1 bis 5, wobei ein oberer Teil des Verbindungsabschnitts zwischen der Schmelzkammer und der Vorwärmkammer eine austauschbare Komponente (12) einschließt, die zur Änderung der Schachtöffnungsabmessung eingerichtet ist.

7. Lichtbogenschmelzanlage nach einem der Ansprüche 1 bis 6, wobei ein Mindestabstand L von der Elektrode zur höchsten Position in dem Verbindungsabschnitt zwischen der Vorwärmkammer und der Schmelzkammer eine Beziehung von "0,2A ≤ L ≤ 5A" erfüllt, wobei A die maximale Länge der Stücke des Eisen-Chargierguts ist.

8. Verfahren zur Herstellung von Metallschmelze durch Anwendung der Lichtbogenschmelzanlage nach einem der Ansprüche 1 bis 7, wobei das Verfahren umfasst:
Vorwärmen der Stücke des Eisen-Chargierguts in der Vorwärmkammer durch Einbringen von in der Schmelzkammer erzeugtem Abgas in die Vorwärmkammer;
Zuführen der Stücke des Eisen-Chargierguts von der Vorwärmkammer zum Vorwärmen der Stücke des Eisen-Chargierguts zu der Schmelzkammer durch Betätigen der an der unteren Seite der Vorwärmkammer angeordneten Schiebevorrichtung;
Herstellen von Metallschmelze durch Schmelzen der Stücke des Eisen-Chargierguts durch Lichtbogenerwärmung in der Schmelzkammer, während die Stücke des Eisen-Chargierguts der Schmelzkammer zugeführt werden, um einen Zustand aufrechtzuerhalten, worin die Stücke des Eisen-Chargierguts in der Vorwärmkammer und in der Schmelzkammer vorhanden sind; und
Haltbetätigung der Schiebevorrichtung und Erhöhen der Temperatur der Metallschmelze.

9. Verfahren zur Herstellung von Metallschmelze nach Anspruch 8, wobei eine Beziehung von "A ≤ H ≤ 4A" erfüllt wird, wobei A die maximale Länge der Stücke des Eisen-Chargierguts ist.

10. Verfahren zur Herstellung von Metallschmelze nach Anspruch 8 oder 9, wobei ein Mindestabstand L von der Elektrode zu der höchsten Position in dem Verbindungsabschnitt zwischen der Vorwärmkammer und der Schmelzkammer eine Beziehung von "0,2A ≤ L ≤ 5A" erfüllt, wobei A die maximale Länge der Stücke des Eisen-Chargierguts ist.

## Revendications

1. Installation de fusion à arc électrique (1) pour fondre des morceaux de fer source ayant différentes longueurs, comprenant une chambre de fusion (2) configurée pour y faire fondre les morceaux du fer source (5), une chambre de préchauffage en forme d'arbre (4) directement reliée à la chambre de fusion pour permettre aux morceaux du fer source d'être présents en continu entre la chambre de préchauffage et la chambre de fusion et configurée pour préchauffer les morceaux du fer source avant que la chambre de fusion ne soit alimentée avec les morceaux du fer source, et une électrode (3a, 3b) disposée dans la chambre de fusion pour faire fondre les morceaux du fer source provenant de la chambre de préchauffage,
dans laquelle au moins une partie d'une surface inférieure (7) de la chambre de préchauffage est formée en une surface inférieure inclinée (7a) qui est inclinée vers le bas vers la chambre de fusion, la surface inférieure de la chambre de préchauffage étant continue jusqu'à une surface inférieure de la chambre de fusion,
dans laquelle un dispositif de poussée est disposé sur un côté inférieur de la chambre de préchauffage et configuré pour déplacer les morceaux du fer source, alimentés depuis la chambre de préchauffage, vers la chambre de fusion, de sorte que l'alimentation des morceaux du fer source à partir de la chambre de préchauffage vers la chambre de fusion est réalisée en actionnant le dispositif de poussée, **caractérisée en ce qu'**une dimension d'ouverture d'arbre H est fixée à une valeur optimale pour commander l'alimentation des morceaux du fer source de sorte que l'alimentation des morceaux du fer source depuis la chambre de préchauffage vers la chambre de fusion est stoppée en arrêtant le fonctionnement du dispositif de poussée (6), la dimension d'ouverture d'arbre H correspondant à une distance minimale à partir d'une position la plus élevée dans une section de raccordement entre la chambre de préchauffage et la chambre de fusion jusqu'aux surfaces inférieures continues de la chambre de préchauffage et de la chambre de fusion dans l'installation de fusion à arc électrique.

2. Installation de fusion à arc électrique selon la revendication 1, dans laquelle la valeur optimale de la dimension d'ouverture d'arbre H est réglée pour satisfaire une relation "A ≤ H ≤ 4A" où A est une longueur maximale des morceaux du fer source.

3. Installation de fusion à arc électrique selon la revendication 1 ou 2, dans laquelle
la surface inférieure inclinée présente un angle d'inclinaison par rapport à une direction horizontale, et
l'angle d'inclinaison est réglé à une valeur optimale pour commander l'alimentation des morceaux du fer source de sorte que l'alimentation des morceaux du fer source de la chambre de préchauffage à la chambre de fusion est stoppée en arrêtant le fonctionnement du dispositif de poussée.

4. Installation de fusion à arc électrique selon la revendication 3, dans laquelle l'angle d'inclinaison par rapport à la direction horizontale se situe dans une plage de 15 à 45 degrés.

5. Installation de fusion à arc électrique selon la revendication 4, dans laquelle l'angle d'inclinaison par rapport à la direction horizontale se situe dans une plage de 25 à 35 degrés.

6. Installation de fusion à arc électrique selon l'une quelconque des revendications 1 à 5, dans laquelle une partie supérieure de la section de raccordement entre la chambre de fusion et la chambre de préchauffage comprend un composant pouvant être remplacé (12) configuré pour modifier la dimension d'ouverture d'arbre.

7. Installation de fusion à arc électrique selon l'une quelconque des revendications 1 à 6, dans laquelle une distance minimale L de l'électrode à la position la plus élevée dans la section de raccordement entre la chambre de préchauffage et la chambre de fusion satisfait à une relation "0,2A ≤ L ≤ 5A", où A est la longueur maximale des morceaux du fer source.

8. Procédé de fabrication de métal fondu à l'aide de l'installation de fusion à arc électrique selon l'une quelconque des revendications 1 à 7, le procédé comprenant :
préchauffer les morceaux du fer source dans la chambre de préchauffage en introduisant des gaz d'échappement produits dans la chambre de fusion à l'intérieur de la chambre de préchauffage ;
alimenter la chambre de fusion avec les morceaux du fer source depuis la chambre de préchauffage pour préchauffer les morceaux du fer source en actionnant le dispositif de poussée disposé sur le côté inférieur de la chambre de préchauffage ;
fabriquer du métal fondu en faisant fondre les morceaux du fer source par chauffage à l'arc dans la chambre de fusion tout en alimentant la chambre de fusion avec les morceaux du fer source afin de maintenir un état dans lequel les morceaux du fer source sont présents dans la chambre de préchauffage et la chambre de fusion ; et
arrêter le fonctionnement du dispositif de poussée et augmenter la température du métal fondu.

9. Procédé de production de métal fondu selon la revendication 8, dans lequel une relation "A ≤ H ≤ 4A" est satisfaite, où A est la longueur maximale des morceaux du fer source.

10. Procédé de fabrication de métal fondu selon la revendication 8 ou 9, dans lequel une distance minimale L de l'électrode à la position la plus élevée dans la section de raccordement entre la chambre de préchauffage et la chambre de fusion satisfait à une relation "0,2A ≤ L < 5A", où A est la longueur maximale des morceaux du fer source.
